# EUROPÄISCHE PATENTSCHRIFT

(11) **EP 2 570 158 B1**
(45) Veröffentlichungstag und Bekanntmachung des Hinweises auf die Patenterteilung: **10.06.2015**
(21) Anmeldenummer: 11181883.7
(22) Anmeldetag: 19.09.2011
(51) Int. Cl.: A62C 2/12, F16L 5/04, F24F 13/14

(54) **Brandschutzklappe mit einem Gehäuse für eine darin schwenkbar um eine Schwenkachse herum gelagerte Absperrklappe**
Fire protection flap with a housing for a pivotable shut-off valve which can be pivoted around a pivoting axle
Clapet anti-feu doté d'un boîtier pour un clapet de fermeture logé à l'intérieur de celui-ci de manière pivotante autour d'un axe de pivotement

(43) Veröffentlichungstag der Anmeldung: 20.03.2013
(73) Patentinhaber: TROX GmbH, 47506 Neukirchen-Vluyn (DE)
(72) Erfinder: Mosters, Martin, 46519 Alpen (DE); Grabner, Dieter, 47805 Krefeld (DE); Gurny, Rüdiger, 46459 Rees (DE); Walter, Siegfried, 47807 Krefeld (DE)
(74) Vertreter: DR. STARK & PARTNER

(56) Entgegenhaltungen:
- EP-A1- 0 635 665
- DE-A1-102007 010 682
- DE-U1- 9 300 413

## Beschreibung

Die Erfindung betrifft eine Brandschutzklappe mit einem Gehäuse für eine darin schwenkbar um eine Schwenkachse herum gelagerte Absperrklappe.

Brandschutzklappen sind aus der Praxis in verschiedenen Ausführungen bekannt siehe z.B. DE 102007010682 A1. Sie besitzen eine schwenkbar gelagerte Absperrklappe, die manuell oder motorisch betätigt werden kann. Brandschutzklappen werden als Teil von Lüftungsleitungen in Wanddurchführungen eingebaut. Sie sollen im Brandfall die Lüftungsleitung abschließen und verhindern, dass sich ein Brand aus einem Raum in den nächsten Raum ausbreitet. Brandschutzklappen werden üblicherweise zum Einbau in eine Wand vermörtelt. Hierzu wird eine Öffnung in die Wand eingebracht und die Brandschutzklappe in dieser Öffnung positioniert. Der sich ergebende umlaufende Spalt wird mit einem Mörtel oder dergleichen verfüllt.

Bekannt ist auch eine Brandschutzklappe, die außenseitig von einem Einbaukörper, der mit einer wärmeabsorbierenden Vergussmasse gefüllt ist, versehen ist. Beide Ausführungsformen sind beispielsweise nicht für einen Wandvorbau und zur Verwendung unter einer gleitenden Decke einsetzbar.

Aufgabe der Erfindung ist es, die vorgenannten Nachteile zu vermeiden und eine Brandschutzklappe anzugeben, die als Einbausatz, als gleitender Deckenanschluss, als Wandvorbau und auch zum Einbau in einer feuerfesten Leitung geeignet ist.

Diese Aufgabe wird dadurch gelöst, dass das Gehäuse außenseitig von zumindest zwei benachbart zueinander angeordneten Platten umfasst ist, wobei jede Platte aus wenigstens zwei Plattensegmenten mit je einer Ausnehmung für einen Teilbereich des Gehäuses aufweist, wobei die Ausnehmung derart ausgebildet ist, dass das Plattensegment seitlich von außen, insbesondere in radialer Richtung, an dem Gehäuse anbringbar ist, und wobei die zugehörigen Plattensegmente jeder Platte sich an zwei Stoßkanten mit dem oder den anderen Plattensegment(en) berühren, wobei die Stoßkanten aller Platten in Strömungsrichtung gesehen nicht miteinander fluchtend angeordnet sind. Das Gehäuse kann einem beliebigen, wie beispielsweise einen runden oder viereckigen Querschnitt aufweisen. Die aus den Plattensegmenten gebildeten Platten liegen dicht an der Außenseite des Gehäuses an und sind daher unmittelbar oder zumindest mittelbar über ein anderes Bauteil mit dem Gehäuse in Kontakt. Die Platten liegen dicht gegeneinander an.

Die erfindungsgemäße Brandschutzklappe erlaubt die Verwendung als Einbausatz, als gleitenden Deckenanschluss, als Wandvorbau sowie den Einbau in eine feuerfeste Leitung.

Die Anzahl an Platten kann beliebig sein. Dies ist beispielsweise von der Dicke der entsprechenden Wandöffnung abhängig. Die Stoßkanten aller Platten sind so ausgerichtet, dass sie in Strömungsrichtung gesehen nicht miteinander fluchtend angeordnet sind.

Selbstverständlich ist es auch möglich, dass die Stoßkanten zweier benachbarter Platten miteinander fluchten. Dann ist aber zumindest eine weitere dritte Platte vorgesehen, wobei die Stoßkanten der dritten Platte nicht mit den Stoßkanten der ersten beiden Platten miteinander fluchtet. Die Plattensegmente benachbarter Platten können miteinander verbunden, insbesondere verklebt, sein, insbesondere wenn sie gleich ausgerichtete Stoßkanten aufweisen.

Das Gehäuse kann einen sich längs des Umfangs der Absperrklappe in geschlossenem Zustand erstreckenden und beidseitig begrenzten, insbesondere als Nut ausgebildeten, Teilbereich aufweisen, der mit einem bei Wärmeeinwirkung ausdehnenden Material versehen ist und dessen Breite zumindest außerhalb des Schnittpunktes zwischen Gehäuse und Schwenkachse der Absperrklappe in etwa der Dicke der Absperrklappe entspricht. Dabei kann in dem Gehäuse und in dem Material zumindest eine Durchführung für die Schwenkachse vorgesehen sein.

Mittels einer Fixiereinrichtung kann die schwenkbar gelagerte Absperrklappe gegen eine Rückstellkraft in ihrer Offenstellung fixierbar sein und aus der fixierten Position (Offenstellung bzw. "Auf"-Stellung) beispielsweise im Brandfall nach Auslösen der Fixiereinrichtung durch die Rückstellkraft in ihre Schließstellung ("Zu"-Stellung) verschwenkbar sein.

Vorzugsweise kann zumindest eine Platte aus zwei, insbesondere identisch ausgebildeten, Plattensegmenten bestehen. Weist das Gehäuse einen runden Querschnitt auf, weist jede Platte eine halbkreisförmige Ausnehmung zur Aufnahme des halben Querschnitts des Gehäuses auf.

Die Platten können zumindest den die Schwenkachse lagernden Teil des Gehäuses umfassen.

Zumindest eine Platte kann Silikate, insbesondere Kalziumsilikat, beinhalten. Es ist auch selbstverständlich möglich, dass eine Platte vollständig aus Kalziumsilikat besteht. Vorzugsweise liegt die Plattendicke zwischen 15 und 25 mm, insbesondere bei etwa 20 mm.

Zumindest an einer Stelle kann zwischen zwei benachbarten Platten ein, insbesondere flächig ausgebildetes und insbesondere als Blecheinlage ausgebildetes, Versteifungselement mit einer Öffnung zum Durchführen des Gehäuses vorgesehen sein, wobei insbesondere die Außenkontur des Versteifungselementes der Außenkontur der Platten entspricht. Die Blecheinlage kann Kräfte bei Ausdehnung des Gehäuses aufnehmen und erhöht damit die Stabilität. Vorzugsweise entspricht dabei die Außenkontur des Versteifungselementes der Außenkontur der Blechplatten. Damit schließt die Blechplatte bündig mit den Platten ab.

Das Versteifungselement, insbesondere das als Blecheinlage ausgebildete Versteifungselement, kann im Bereich des Randes der Öffnung zumindest eine abgewinkelte Lasche aufweisen. Diese abgewinkelte Lasche kann beispielsweise mittels Nieten an dem Gehäuse befestigt sein. Selbstverständlich kann das Versteifungselement auch auf andere Weise, beispielsweise durch Anschweißen, an dem Gehäuse befestigt werden.

Zumindest eine Platte kann außenseitig wenigstens einen umlaufenden Dichtstreifen aus einem bei Wärmebeaufschlagung ausdehnenden Material tragen. Im Brandfall dehnt sich das Material aus, so dass ein eventuell verbleibender Zwischenraum oder Spalt zwischen dem Umfang der Platten und beispielsweise dem Rand der Wandöffnung in einer Mauer verschlossen wird.

An einer Außenseite zumindest einer der beiden äußeren Platten kann eine Blende, insbesondere zur Montage der Brandschutzklappe in einer Öffnung einer Wand, vorgesehen sein. Die Blende dient zur Überdeckung des Übergangsbereichs von den Platten zur Wand und zur Befestigung der Brandschutzklappe.

Zumindest eine Stoßkante eines Plattensegmentes kann eine Abdichtung gegen Heißgase, insbesondere eine, vorzugsweise streifenförmige, keramische oder mineralische Wolle aufweisende Abdichtung, aufweisen.

Zumindest zwischen den Plattensegmenten einer Platte einerseits und dem Gehäuse andererseits kann als Abdichtung gegen Gase eine, vorzugsweise streifenförmige, keramische oder mineralische Wolle aufweisende Abdichtung, vorgesehen sein.

Im Folgenden werden in den Zeichnungen dargestellte Ausführungsbeispiele der Erfindung erläutert. Es zeigen:
- Fig. 1: ein erstes Ausführungsbeispiel einer erfindungsgemäßen als Einbausatz ausgebildeten Brandschutzklappe,
- Fig. 2: ein zweites Ausführungsbeispiel einer erfindungsgemäßen als gleitender Deckenanschluss ausgebildeten Brandschutzklappe,
- Fig. 3: ein drittes Ausführungsbeispiel einer erfindungsgemäßen, für den Wandvorbau ausgebildeten Brandschutzklappe und
- Fig. 4: ein viertes Ausführungsbeispiel einer erfindungsgemäßen zum Einbau in einer feuerfesten Leitung (L90-Leitung) ausgebildeten Brandschutzklappe.

In allen Figuren werden für gleiche bzw. gleichartige Bauteile übereinstimmende Bezugszeichen verwendet.

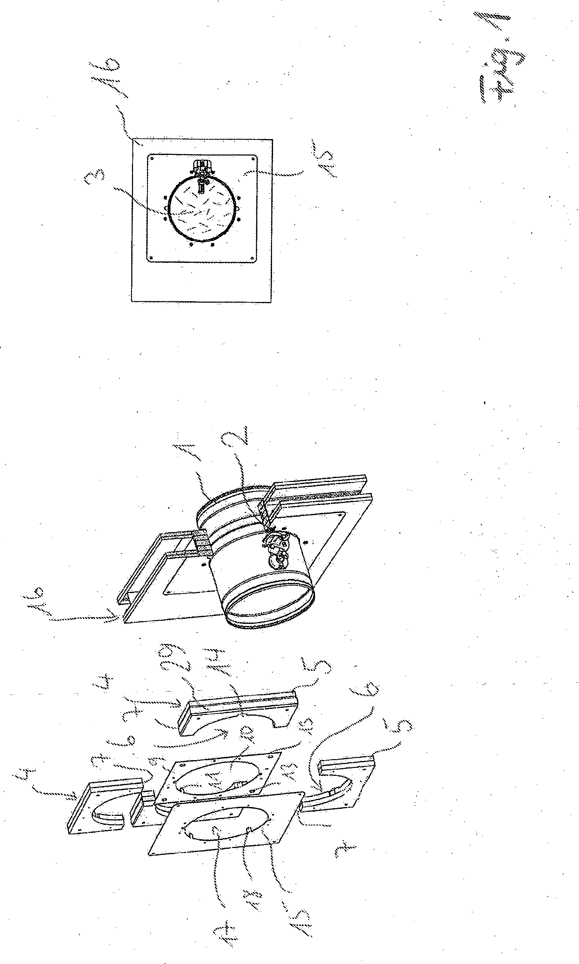

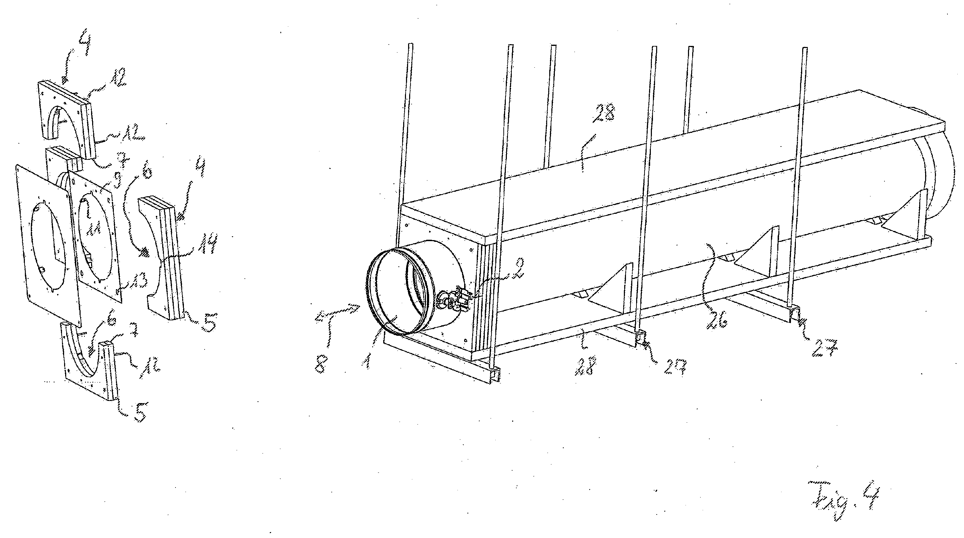

Die Fig. 1 und 4 zeigen vier unterschiedliche Verwendungen der erfindungsgemäßen Brandschutzklappe. Die in den Figuren dargestellte Brandschutzklappe weist ein Gehäuse 1 auf, das in den vorliegenden Ausführungsbeispielen einen runden Querschnitt hat. In dem Gehäuse 1 ist eine um eine Schwenkachse 2 herum drehbar gelagerte Absperrklappe 3 angeordnet.

Außenseitig um das Gehäuse 1 herum sind insgesamt fünf Platten 4 angeordnet, wobei jede Platte 4 aus zwei identisch ausgebildeten Plattensegmenten 5 besteht. Jedes Plattensegment 5 weist eine halbkreisförmige Ausnehmung 6 auf. Die Plattensegmente 5 werden seitlich von außen an dem Gehäuse 1 angebracht. Die Plattensegmente 5 liegen mit dem Rand der Ausnehmung 6 eng an der Außenseite des Gehäuses 1 an. Zur Abdichtung gegen Heißgase ist zumindest zwischen den Plattensegmenten 5 einer Platte 4 einerseits und dem Gehäuse 1 andererseits als Abdichtung eine streifenförmig ausgebildete keramische Wolle vorgesehen. Die Dicke der keramischen Wolle beträgt etwa 3 mm.

Jedes Plattensegment 5 einer Platte 4 weist zwei Stosskanten 7 auf. Diese Stosskanten 7 berühren die beiden Stosskanten 7 des korrespondierenden Plattensegmentes 5 dieser Platte 4. Zur Abdichtung gegen Heißgase ist auf zumindest einer der beiden sich berührenden Stoßkanten 7 zweier korrespondierender Plattensegmente 5 einer Platte 4 eine keramische Wolle aufgebracht. Die Dicke der keramischen Wolle beträgt etwa 3 mm.

Wie den Figuren zu entnehmen ist, weist jede Brandschutzklappe in dem dargestellten Ausführungsbeispiel insgesamt fünf Platten 4 auf. Die fünf Platten 4 bilden eine "Dreier"-Plattengruppe und eine "Zweier"-Plattengruppe, wobei die Stoßkanten 7 innerhalb jeder Plattengruppe gleich ausgerichtet sind, während die Stoßkanten 7 beider Plattengruppen selbst nicht miteinander fluchten.

Wie den Explosionszeichnungen zu entnehmen ist, werden die Plattensegmente 5 einer jeden Plattengruppe vorzugsweise vor der Montage beispielsweise durch Verkleben untereinander verbunden und dann an dem Gehäuse 1 montiert. Die Stoßkanten 7 der Plattensegmente 5 der Dreier-Plattengruppe sind auf 12.00 Uhr und 6.00 Uhr und die Stoßkanten 7 der Plattensegmente 5 der Zweier-Gruppe auf 3.00 Uhr und 9.00 Uhr angeordnet. Damit sind die Stoßkanten 7 aller Platten 5 in Strömungsrichtung 8 gesehen nicht miteinander fluchtend angeordnet sondern um 90° zueinander versetzt.

Zwischen der Zweier-Plattengruppe und der Dreier-Plattengruppe ist ein als Blecheinlage ausgebildetes Versteifungselement 9 vorgesehen. Das Versteifungselement kann beispielsweise eine Dicke von 1,5 mm aufweisen. Das Versteifungselement 9 wird an dem Gehäuse 1 der Brandschutzklappe mittels nicht näher dargestellter Nieten befestigt. Hierzu sind an dem Versteifungselement 9 an dem Rand der Öffnung 10 Laschen 11 vorgesehen, die abgewinkelt sind.

Bei der Montage wird das Gehäuse 1 der Brandschutzklappe durch die Öffnung 10 der Blecheinlage geführt und die Blecheinlage beispielsweise durch Vernieten an dem Gehäuse 1 befestigt.

Anschließend werden die Plattensegmente 5 der Dreier-Plattengruppe und der Zweier-Plattengruppe von außen an dem Gehäuse 1 angebracht. Zur Befestigung der Plattensegmente 5 sind Schrauben 12 vorgesehen, die die Plattensegmente 5 der Zweier- und der Dreier-Plattengruppe sowie das Versteifungselement 9 durchfassen. Hierzu sind in dem Versteifungselement 9 Bohrungen 13 vorgesehen.

Die Platten 4 sind so angeordnet, dass sie den die Schwenkachse 2 lagernden Teil des Gehäuses 1 umfassen. Die Plattensegmente 5, die sich in Längserstreckung der Schwenkachse 2 befinden, weisen einen Freiraum 14 zur Aufnahme der aus dem Gehäuse 1 außenseitig hervorstehenden Schwenkachse 2 auf.

Damit sind die Plattensegmente 5 der Zweier-Plattengruppe und die Plattensegmente 5 der Dreier-Plattengruppen um 90° zueinander versetzt angeordnet, so dass keine Gase durch die Stoßkanten 7 strömen können. Da das Versteifungselement 9 mit dem Gehäuse 1 verbunden ist, ist der gesamte Einbausatz fest mit der Brandschutzklappe verbunden.

Bei dem Ausführungsbeispiel nach Fig. 1 ist zusätzlich an der äußeren Platte 4 der Zweier-Plattengruppe eine Blende 15 vorgesehen, deren Abmessungen größer als die Abmessungen der Platten 4 sind. Diese Ausführungsform stellt einen Einbausatz für den Trockeneinbau in einer Wand 16 dar. Bei der Wand 16 kann es sich um eine Massivwand oder auch um eine Leichtbauwand handeln.

Die Blende 15 verschließt einerseits den umlaufenden Spalt zwischen der Wandöffnung in der Wand 16 und der Brandschutzklappe und stellt so sicher, dass keine "kalten" Rauchgase von einer Seite der Wand 16 zu der anderen Seite der Wand 16 übertragen werden können. Auch dient die Blende 15 zur zusätzlichen Befestigung der Brandschutzklappe in der Öffnung der Wand 16. Die Blende 15 weist eine mittige Öffnung 17 auf. An dem Öffnungsrand sind Laschen 18 vorgesehen, damit die Blende 15 nach dem Einführen des Gehäuses 1 in die Öffnung 17 an dem Gehäuse 1 fixiert werden kann.

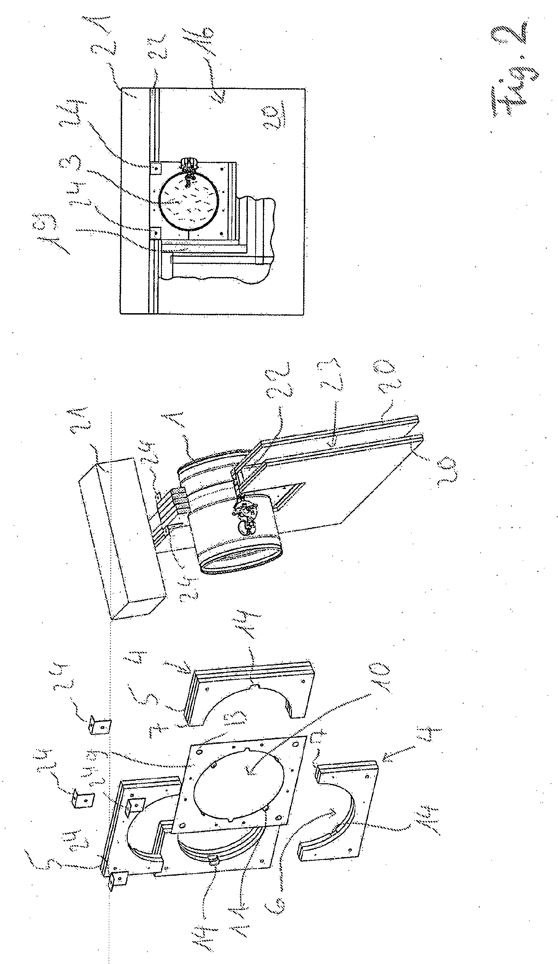

In Fig. 2 ist die Verwendung der erfindungsgemäßen Brandschutzklappe als gleitender Deckenanschluss dargestellt. Bei einem gleitenden Deckenanschluss handelt es sich bei der Wand 16 üblicherweise um eine Leichtbauwand, die im Inneren eine tragende Konstruktion 19 aufweist. Auf der tragenden Konstruktion 19 sind beidseitig Gipskartonfaserplatten 20 befestigt. Um eine Verlagerung einer Decke 21 gegenüber der Wand 16 zu realisieren, ist unterseitig an der Decke 21 ein üblicherweise U-förmig ausgebildetes Profil 22 vorgesehen, dessen beiden nach unten gerichteten Schenkel in einen Zwischenraum 23 der Wand 16 eingreifen, so dass auf diese Weise eine vertikale Verschiebebewegung der Decke 21 bei Belastung möglich ist.

Wie in Fig. 2 dargestellt, sind - statt der Blende 15 auf einer Außenseite wie in Fig. 1 - an jeder Außenseite der beiden äußeren Platten 4 je zwei Winkel 24 angeschraubt, so dass eine Montage der Brandschutzklappe an der Decke 21 möglich ist.

Statt oder in Ergänzung des u-förmig ausgebildeten Profils 22 können zur Erzeugung des Gleitbereiches der Decke 21 unterhalb der Decke 21 auch mehrere Lagen an Gipskartonfaserstreifen montiert werden. An diesen Gipskartonfaserstreifen liegen die Gipskartonfaserplatten 20 beidseitig gleitend an. Da die Brandschutzklappe, wie auch der Lüftungskanal, fest mit der Decke 21 verbunden ist, bewegen sich diese Teile nicht relativ zur Decke 21.

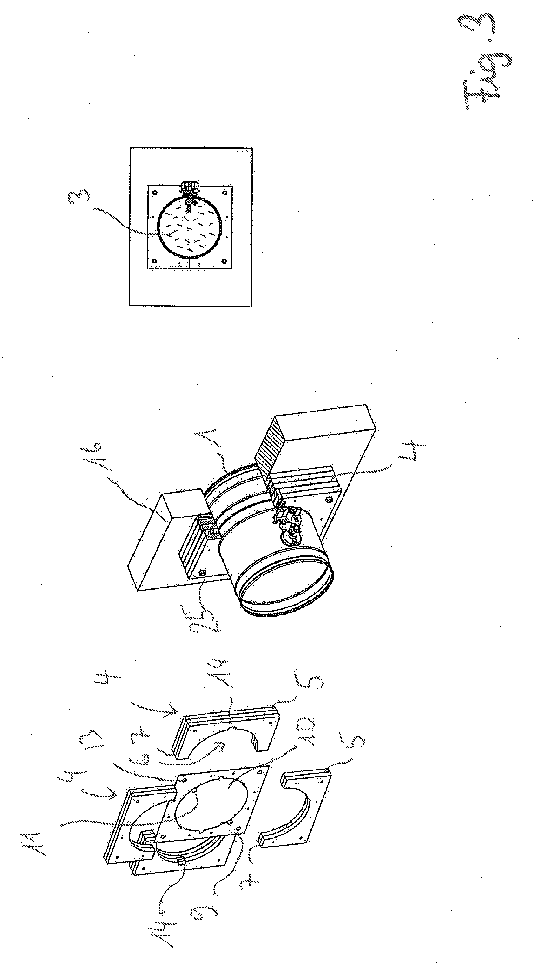

In Fig. 3 ist die Verwendung der erfindungsgemäßen Brandschutzklappe als Wandvorbau dargestellt. Hier berühren die Platten 4 mit ihrem außenseitigen Umfang den Innenrand der Öffnung in einer Wand 16 nicht. Vielmehr ist die Öffnung in der Wand 16 nur so groß, dass das Gehäuse 1 hineingeschoben werden kann. Mittels Schrauben 25, die durch die Platten 4 geführt sind, wird die Brandschutzklappe an der Wand 16 befestigt. Daher ist die Außenseite der in dem dargestellten Ausführungsbeispiel rechten äußeren Platte 4 mit der Wand 16 in Kontakt.

In Fig. 4 ist der Einbau einer erfindungsgemäßen Brandschutzklappe in einer feuerfesten Leitung (L90-Kanal) 26 dargestellt. Wie der Figur zu entnehmen ist, wird die Leitung 26 mittels einer Tragkonstruktion 27 unterhalb einer nicht dargestellten Decke geführt. Die Leitung 26 ist allseitig von einer Einhausung 28 umgeben. Die Brandschutzklappe ist so eingebaut, dass der Außenrand der fünf Platten 5 mit der Innenseite der Einhausung 28 in Kontakt ist. Bei dem Ausführungsbeispiel nach Fig. 1 ist außenseitig ein umlaufender Dichtstreifen 29 aus einem sich bei Wärmebeaufschlagung ausdehnenden Material vorgesehen, dessen Breite in dem dargestellten Ausführungsbeispiel in etwa der Dicke zweier benachbarter Platten 4 entspricht.

## Patentansprüche

1. Brandschutzklappe mit einem Gehäuse (1) für eine darin schwenkbar um eine Schwenkachse (2) herum gelagerte Absperrklappe (3), wobei das Gehäuse (1) außenseitig von zumindest zwei benachbart zueinander angeordneten Platten (4) umfasst ist, wobei jede Platte (4) aus wenigstens zwei Plattensegmenten (5) mit je einer Ausnehmung (6) für einen Teilbereich des Gehäuses (1) aufweist, wobei die Ausnehmung (6) derart ausgebildet ist, dass das Plattensegment (5) seitlich von außen, insbesondere in radialer Richtung, an dem Gehäuse (1) anbringbar ist, und wobei die zugehörigen Plattensegmente (5) jeder Platte (4) sich an zwei Stoßkanten (7) mit dem oder den anderen Plattensegment(en) (5) berühren, wobei die Stoßkanten (7) aller Platten (4) in Strömungsrichtung (8) gesehen nicht miteinander fluchtend angeordnet sind.

2. Brandschutzklappe nach dem vorhergehenden Anspruch, **dadurch gekennzeichnet, dass** zumindest eine Platte (4) aus zwei, insbesondere identisch ausgebildeten, Plattensegmenten (5) besteht.

3. Brandschutzklappe nach einem der vorhergehenden Ansprüche, **dadurch gekennzeichnet, dass** die Platten (4) zumindest den die Schwenkachse (2) lagernden Teil des Gehäuses (1) umfassen.

4. Brandschutzklappe nach einem der vorhergehenden Ansprüche, **dadurch gekennzeichnet, dass** zumindest eine Platte (4) Silikate, insbesondere Kalziumsilikat, beinhaltet.

5. Brandschutzklappe nach einem der vorhergehenden Ansprüche, **dadurch gekennzeichnet, dass** zumindest an einer Stelle zwischen zwei benachbarten Platten (4) ein, insbesondere flächig ausgebildetes und insbesondere als Blecheinlage ausgebildetes, Versteifungselement (9) mit einer Öffnung (10) zum Durchführen des Gehäuses (1) vorgesehen ist, wobei insbesondere die Außenkontur des Versteifungselementes (9) der Außenkontur der Platten (4) entspricht.

6. Brandschutzklappe nach einem der vorhergehenden Ansprüche, **dadurch gekennzeichnet, dass** das Versteifungselement (9), insbesondere das als Blecheinlage ausgebildete Versteifungselement (9), im Bereich des Randes der Öffnung (10) zumindest eine abgewinkelte Lasche (11) aufweist.

7. Brandschutzklappe nach einem der vorhergehenden Ansprüche, **dadurch gekennzeichnet, dass** zumindest eine Platte (4) außenseitig wenigstens einen umlaufenden Dichtstreifen (29) aus einem bei Wärmebeaufschlagung ausdehnenden Material trägt.

8. Brandschutzklappe nach einem der vorhergehenden Ansprüche, **dadurch gekennzeichnet, dass** an einer Außenseite zumindest einer der beiden äußeren Platten (4) eine Blende (15), insbesondere zur Montage der Brandschutzklappe in einer Öffnung einer Wand (16), vorgesehen ist.

9. Brandschutzklappe nach einem der vorhergehenden Ansprüche, **dadurch gekennzeichnet, dass** zumindest eine Stoßkante (7) eines Plattensegmentes (5) eine Abdichtung gegen Heißgase, insbesondere eine, vorzugsweise streifenförmige, keramische oder mineralische Wolle aufweisende Abdichtung, aufweist.

10. Brandschutzklappe nach einem der vorhergehenden Ansprüche, **dadurch gekennzeichnet, dass** zumindest zwischen den Plattensegmenten (5) einer Platte (4) einerseits und dem Gehäuse (1) andererseits eine, vorzugsweise streifenförmige, keramische oder mineralische Wolle aufweisende Abdichtung, vorgesehen ist.

## Claims

1. Fire protection flap with a housing (1) for a shutoff flap (3) mounted pivotably therein about a pivot axis (2), wherein the housing (1) is surrounded on the outside by at least two plates (4) arranged next to each other, wherein each plate (4) is formed from at least two plate segments (5) each with a recess (6) for a part region of the housing (1), wherein the recess (6) is configured such that the plate segment (5) can be brought onto the housing (1) laterally from the outside, in particular in the radial direction, and wherein the associated plate segments (5) of each plate (4) touch the other plate segment(s) (5) at two abutment edges (7), wherein the abutment edges (7) of all plates (4) are aligned so as not to be flush with each other viewed in the flow direction (8).

2. Fire protection flap according to the preceding claim, **characterised in that** at least one plate (4) consists of two plate segments (5) which are in particular configured identically.

3. Fire protection flap according to any one of the preceding claims, **characterised in that** the plates (4) surround at least the part of the housing (1) bearing the pivot axis (2).

4. Fire protection flap according to any one of the preceding claims, **characterised in that** at least one plate (4) contains silicates, in particular calcium silicate.

5. Fire protection flap according to any one of the preceding claims, **characterised in that** a reinforcement element (9) is provided at least at one point between two adjacent plates (4), which in particular is configured flat and in particular is formed as a sheet inlay with an opening (10) for the passage of the housing (1), wherein in particular the outer contour of the reinforcement element (9) corresponds to the outer contour of the plates (4).

6. Fire protection flap according to any one of the preceding claims, **characterised in that** the reinforcement element (9), in particular the reinforcement element (9) formed as a sheet inlay, has at least one angled tab (11) in the region of the edge of the opening (10).

7. Fire protection flap according to any one of the preceding claims, **characterised in that** at least one plate (4) on the outside carries at least one peripheral sealing strip (29) made from a material which expands on application of heat.

8. Fire protection flap according to any one of the preceding claims, **characterised in that** a diaphragm (15) is provided on an outside of at least one of the two outer plates (4), in particular for mounting of the fire protection flap in an opening of a wall (16).

9. Fire protection flap according to any one of the preceding claims, **characterised in that** at least one abutment edge (7) of a plate segment (5) has a seal against hot gases, in particular a preferably strip-like seal comprising ceramic or mineral wool.

10. Fire protection flap according to any one of the preceding claims, **characterised in that** a preferably strip-like seal comprising ceramic or mineral wool is provided at least between the plate segments (5) of a plate (4) on one side and the housing (1) on the other side.

## Revendications

1. Clapet anti-feu avec un boîtier (1) pour un clapet de fermeture (3) logé à l'intérieur de celui-ci de manière pivotante autour d'un axe de pivotement (2), sachant que le boîtier (1) est entouré sur le côté extérieur par au moins deux plaques (4) disposées au voisinage les unes des autres, sachant que chaque plaque (4) est constituée d'au moins deux segments de plaque (5) dotés chacun d'un évidement (6) pour une région partielle du boîtier (1), sachant que l'évidement (6) est configuré de telle sorte que le segment de plaque (5) peut être mis en place latéralement de l'extérieur, en particulier en direction radiale, contre le boîtier (1), et sachant que les segments de plaque associés (5) de chaque plaque (4) entrent en contact sur deux arêtes de joint (7) avec le ou les autres segment(s) de plaque (5), sachant que les arêtes de joint (7) de toutes les plaques (4) ne sont pas disposées en alignement mutuel, considéré dans la direction de flux (8).

2. Clapet anti-feu selon la revendication précédente, **caractérisé en ce qu'**au moins une plaque (4) est constituée de deux segments de plaque (5), en particulier de configuration identique.

3. Clapet anti-feu selon l'une des revendications précédentes, **caractérisé en ce que** les plaques (4) entourent au moins la partie du boîtier (1) qui loge l'axe de pivotement (2).

4. Clapet anti-feu selon l'une des revendications précédentes, **caractérisé en ce qu'**au moins une plaque (4) contient des silicates, en particulier du silicate de calcium.

5. Clapet anti-feu selon l'une des revendications précédentes, **caractérisé en ce que**, au moins en un endroit entre deux plaques voisines (4), il est prévu un élément de renforcement (9), en particulier de configuration plane et réalisé notamment sous forme d'insert en tôle, doté d'une ouverture (10) pour le passage du boîtier (1), sachant notamment que le contour extérieur de l'élément de renforcement (9) correspond au contour extérieur des plaques (4).

6. Clapet anti-feu selon l'une des revendications précédentes, **caractérisé en ce que** l'élément de renforcement (9), en particulier l'élément de renforcement (9) réalisé sous forme d'insert en tôle, présente dans la région du bord de l'ouverture (10) au moins une patte recourbée (11).

7. Clapet anti-feu selon l'une des revendications précédentes, **caractérisé en ce qu'**au moins une plaque (4) porte sur le côté extérieur au moins une bande d'étanchéité entourante (29) constituée d'un matériau se dilatant en cas de sollicitation thermique.

8. Clapet anti-feu selon l'une des revendications précédentes, **caractérisé en ce qu'**un cadre (15), en particulier destiné au montage du clapet anti-feu dans une ouverture d'une cloison (16), est prévu sur un côté extérieur d'au moins une des deux plaques extérieures (4).

9. Clapet anti-feu selon l'une des revendications précédentes, **caractérisé en ce qu'**au moins une arête de joint (7) d'un segment de plaque (5) présente un moyen d'étanchéité contre les gaz brûlants, en particulier un moyen d'étanchéité, de préférence en forme de bande, présentant de la laine céramique ou minérale.

10. Clapet anti-feu selon l'une des revendications précédentes, **caractérisé en ce qu'**un moyen d'étanchéité, de préférence en forme de bande, présentant de la laine céramique ou minérale est prévu au moins entre les segments de plaque (5) d'une plaque (4) d'une part et le boîtier (1) d'autre part.
